**Europäisches Patentamt**

**European Patent Office**

**Office européen des brevets**

(11) Veröffentlichungsnummer: **0 519 356 A2**

## (12) EUROPÄISCHE PATENTANMELDUNG

(21) Anmeldenummer: **92109972.7**

(22) Anmeldetag: **13.06.92**

(51) Int. Cl.5: **F02D 1/16**, F01L 1/34, F16D 3/10

(30) Priorität: **21.06.91 DE 4120496**

(43) Veröffentlichungstag der Anmeldung: **23.12.92 Patentblatt 92/52**

(84) Benannte Vertragsstaaten: **DE FR GB IT**

(71) Anmelder: **Klöckner-Humboldt-Deutz Aktiengesellschaft Deutz-Mülheimer-Strasse 111 Postfach 80 05 09 W-5000 Köln 80(DE)**

(72) Erfinder: **Lemme, Werner, Dipl.-Ing. Im Hof 38 W-5064 Rösrath 1(DE)**
Erfinder: **Tedsen, Kai Backesstrasse 6 W-5030 Hürth-Fischenich(DE)**

(54) **Verstellvorrichtung.**

(57) Die Erfindung betrifft eine Verstellvorrichtung zur Drehverstellung von Nockenwellen einer Brennkraftmaschine. Der Erfindung liegt die Aufgabe zugrunde, einen Einbauspritzversteller zu schaffen, der zwar an den Ölkreislauf des Motors angeschlossen ist, jedoch einen Antrieb von außerhalb des Motorgehäuses ermöglicht.

Die Aufgabe wird dadurch gelöst, daß das Sekundärteil (2) des Spritzverstellers koaxial im Inneren von dessen Primärteil (1) angeordnet ist und daß letzteres auf seinem Außenumfang einen ölfreien Bereich (12) aufweist, in dem die Antriebsvorrichtung (4) des Spritzverstellers liegt.

EP 0 519 356 A2

Die Erfindung betrifft eine Verstellvorrichtung zur Drehverstellung von Nockenwellen einer Brennkraftmaschine, insbesondere nach dem Oberbegriff des Anspruchs 1.

Beim Dieselmotor werden Verstellvorrichtungen zur Drehverstellung von Nockenwellen, sogenannte Spritzversteller verwendet, um den Einspritzzeitpunkt des Kraftstoffes in den Brennraum drehzahlabhängig zu variieren. Ein Spritzversteller kann im Antriebsstrang der Nockenwelle einer Einspritzpumpe oder einer Gaswechselnockenwelle angeordnet sein, die zusätzlich Nocken für Einzeleinspritzpumpen trägt.

Beim mechanischen Spritzversteller unterscheidet man den sogenannten Einbauspritzversteller und den Anbauspritzversteller. Der Einbauspritzversteller befindet sich in einem öldichten Gehäuse und ist an den Ölkreislauf des Motors angeschlossen. Er ist wartungsfrei.

Der Anbauspritzversteller bedarf keines öldichten Gehäuses, da er selbst öldicht ist und eine Ölfüllung aufweist, die jedoch erneuert werden muß und damit einen Wartungsaufwand verursacht. Der Vorteil des Anbauspritzverstellers ist seine einfache Montage und die Möglichkeit eines nicht geschmierten Antriebes zum Beispiel über einen Zahnriemen.

Der Erfindung liegt deshalb die Aufgabe zugrunde, einen Einbauspritzversteller zu schaffen, der zwar an den Ölkreislauf des Motors angeschlossen ist, jedoch einen Antrieb von außerhalb des Motorgehäuses ermöglicht.

Die Aufgabe wird gelöst durch die kennzeichnenden Merkmale des Anspruchs 1. Durch die Anordnung des Sekundärteils im Inneren des Primärteils ist die Möglichkeit geschaffen, die Innenbauteile der Verstellvorrichtung zu schmieren und zugleich den Außenumfang des Primärteils im wesentlichen ölfrei zu halten, um dort eine nicht geschmierte Antriebsvorrichtung vorsehen zu können.

Durch eine vorteilhafte Weiterbildung der Erfindung wird auf einfache Weise der ölfreie Bereich 12 vom geschmierten Teil der Verstellvorrichtung getrennt. Aufgrund der im Vergleich zur Kurbelwelle nur halben Drehzahl der Nockenwelle und damit der Verstellvorrichtung ist der erforderliche große Durchmesser der Öldichtung 5 ohne Verschleißprobleme für die Dichtung zulässig.

Eine vorteilhafte Ausbildung der Erfindung gestattet die Verwendung eines kostengünstigen Antriebes für die Verstellvorrichtung mittels eines Zahnriemens. Da dieser keinerlei Wartung erfordert ist die Verstellvorrichtung insgesamt wartungsfrei.

Eine vorteilhafte Ausbildung der Erfindung bietet die Voraussetzungen für einen schmierölfreien Antrieb des Spritzverstellers.

Durch eine vorteilhafte Weiterbildung der Erfindung ist eine einfache und genaue Einstellung des Einspritzzeitpunktes der Einspritzpumpenelemente bzw. der Einspritzpumpe möglich. Dies kann aufgrund einer vorteilhaften Ausbildung der Erfindung von außen geschehen, ohne das Motorgehäuse öffnen zu müssen. Dabei ist die Öffnung im Primärteil der Verstellvorrichtung so groß gewählt, daß ein Steckschlüssel zum Lösen der zentralen Schraube Platz findet.

Eine vorteilhafte Ausbildung der Erfindung stellt die Ölversorgung der Verstellvorrichtung sicher, indem dieselbe unmittelbar an den Ölkreislauf des Motors angeschlossen ist.

Eine vorteilhafte Weiterbildung der Erfindung gestattet eine kostengünstige Anordnung eines Meßwerkträgers des Motordrehzahlreglers. Die Verstelleinrichtung mit dem Meßwerkträger kann vorteilhafterweise als vorkomplettierte Einheit auf Funktion überprüft werden.

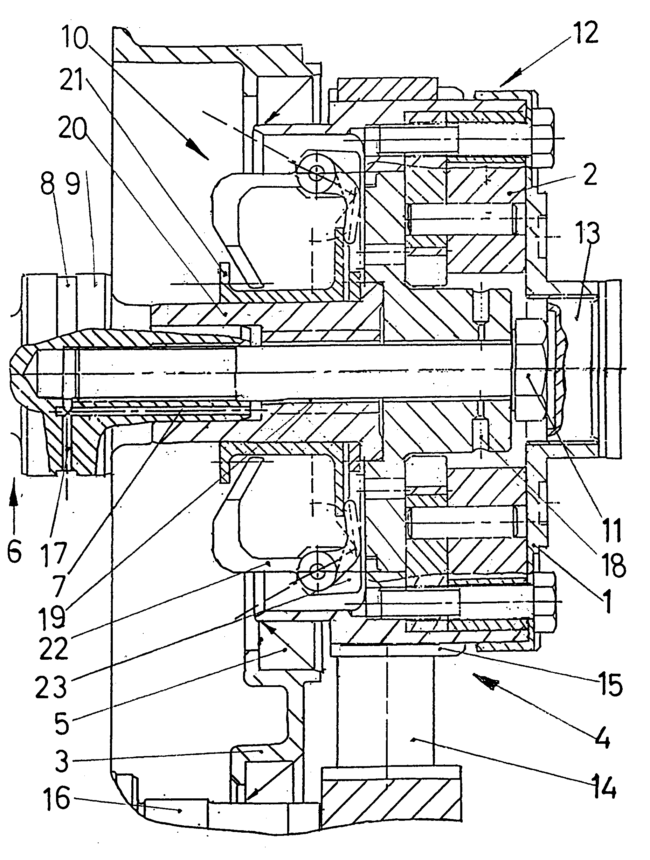

Weitere Merkmale der Erfindung gehen aus der Beschreibung hervor und der Zeichnung, auf der ein Ausführungsbeispiel schematisch dargestellt ist.

Die Abbildung zeigt einen Querschnitt durch die erfindungsgemäße Verstellvorrichtung mit ihrem Antrieb.

Die Verstellvorrichtung besteht aus einem Primärteil 1 und einem Sekundärteil 2. Das Primärteil 1 umschließt das Sekundärteil 2 und beide Teile sind gegeneinander verdrehbar. Das Primärteil 1 stützt sich auf den Sekundärteil 2 ab. Das Sekundärteil 2 ist mittels einer zentralen Schraube 11 an eine Nockenwelle 6 geschraubt.

Das Primärteil 1 ragt in ein Gehäuse 3 und ist gegenüber diesem mittels einer Öldichtung 5 an seinem Umfang öldicht abgedichtet. Dadurch bleibt der dem Gehäuse 3 abgewandte Teil des Primärteils 1 ölfrei. In diesem ölfreien Bereich befindet sich ein Zahnriemenrad 15, das in Wirkverbindung mit einem Zahnriemen 14 steht. Dieser wird von einem weiteren Zahnriemenrad auf der Kurbelwelle 16 angetrieben.

Das Innere der Verstellvorrichtung wird von der Ölversorgung eines Nockenwellenlagers 9 über dessen Schmierölnut 8, eine erste Radialbohrung 17, eine axiale Schmierölbohrung 7, einen Ringspalt 19 und eine zweite Radialbohrung 18 geschmiert.

Die zentrale Schraube 11 ist über einen koaxialen Stopfen 13 von außen zugänglich. Dadurch besteht eine einfache Möglichkeit, die Verstellvorrichtung gegenüber der Nockenwelle zu verdrehen und damit den Einspritzzeitpunkt des Motors zu verändern.

Auf einem Zwischenstück 20 zwischen dem Sekundärteil 2 und der Nockenwelle 6 ist das Meßwerk des Drehzahlreglers mit einem Fliehgewichtsträger 23, den Fliehgewichten 22 und einer Verstellmuffe 21 angeordnet.

Die Verstellvorrichtung und das Meßwerk des Drehzahlreglers können als vorkomplettierte Einheit unabhängig vom Motor funktionsgeprüft werden. Dadurch ist eine Vereinfachung der Fertigung gegeben.

Aufgrund des ölfreien Bereiches 12 am Umfang des Primärteiles 1 kann die Verstellvorrichtung mittels eines ungeschmierten Zahnriemens angetrieben werden. Diese Lösung bietet Kosten- und Geräuschvorteile gegenüber einem geschmierten Zahnrad oder Kettenantrieb der Verstellvorrichtung.

Auf der anderen Seite bietet der Anschluß der Verstellvorrichtung an die Schmierölversorgung des Motors einen verschleiß- und wartungsfreien Betrieb der Verstellvorrichtung. Somit bietet die erfindungsgemäße Verstellvorrichtung die Vorteile einer Anbau- und einer Einbauverstellvorrichtung ohne die jeweiligen Nachteile.

**Patentansprüche**

1. Verstellvorrichtung zur Drehverstellung von Nockenwellen einer Brennkraftmaschine, mit einem Primärteil (1), das in Wirkverbindung mit einer Antriebsvorrichtung (4) und einem Sekundärteil (2) steht, das gegenüber dem Primärteil (1) drehzahlabhängig verdrehbar ist, wobei die Verstellvorrichtung vom Schmierölkreislauf der Brennkraftmaschine aus geschmiert und in einem Gehäuse (3) angeordnet ist, dadurch gekennzeichnet, daß das Sekundärteil (2) koaxial im Innern des Primärteils (1) angeordnet ist, und daß letzteres auf seinem Außenumfang einen ölfreien Bereich (12) aufweist, in dem die Antriebsvorrichtung (4) liegt.

2. Verstellvorrichtung nach Anspruch 1, dadurch gekennzeichnet, daß zwischen dem Gehäuse (3) und dem Umfang des Primärteils (1) eine Öldichtung (5) vorgesehen ist, die dessen ölfreien Bereich (12) vom geschmierten Teil der Verstellvorrichtung trennt.

3. Verstellvorrichtung nach Anspruch 1 oder 2, dadurch gekennzeichnet, daß die Antriebsvorrichtung (4) ein Zahnriemenrad aufweist, das auf dem Außenumfang des Primärteils (1) in dessen ölfreien Bereich (12) angeordnet ist.

4. Verstellvorrichtung nach einem der vorangegangenen Ansprüche, dadurch gekennzeichnet, daß das Primärteil (1) in seinem ölfreien Bereich (12) öldicht ausgebildet ist.

5. Verstellvorrichtung nach einem der Vorangegangenen Ansprüche,
dadurch gekennzeichnet, daß eine koaxiale Schraube (11) zur Befestigung des Sekundärteils (2) am antriebsseitigen Ende einer Nockenwelle (6) vorgesehen ist.

6. Verstellvorrichtung nach einem der Vorangegangenen Ansprüche,
dadurch gekennzeichnet, daß das Primärteil (1) einen koaxialen, öldichten Schraubstopfen (13) aufweist, der von der ölfreien Seite des Primärteils (1) aus einschraubbar ist und dessen Gewindedurchmesser größer als der Kopfdurchmesser der Schraube (11) ist.

7. Verstellvorrichtung nach einem der Vorangegangenen Ansprüche,
dadurch gekennzeichnet, daß eine axiale, exzentrische Schmierölbohrung (7) am antriebsseitigen Ende der Nockenwelle (6) vorgesehen ist, die in Strömungsverbindung sowohl mit dem Sekundärteil (2) als auch mit einer Schmierölnut (7) eines Nockenwellenlagers (9) steht.

8. Verstellvorrichtung nach einem der Vorangegangenen Ansprüche,
dadurch gekennzeichnet, daß ein Meßwerkträger (10) eines Drehzahlreglers in Baueinheit mit dem Sekundärteil (2) zwischen diesem und dem antriebsseitigen Ende der Nockenwelle (6) angeordnet ist.